# EUROPEAN PATENT SPECIFICATION

(11) **EP 0 809 441 B1**
(45) Date of publication and mention of the grant of the patent: **24.10.2001**
(21) Application number: 96906557.2
(22) Date of filing: 16.02.1996
(51) Int. Cl.: A23C 19/068, A23C 19/09

(54) **PROCESS OF MAKING A SOFT OR SEMI-SOFT FIBROUS CHEESE**
VERFAHREN ZUR HERSTELLUNG VON FASERIGEM WEICHKÄSE ODER HALBWEICHEM KÄSE
PROCEDE POUR FABRIQUER UN FROMAGE FIBREUX A PATE MOLLE OU SEMI-MOLLE

(30) Priority: 16.02.1995 US 389932
(43) Date of publication of application: 03.12.1997
(73) Proprietor: LEPRINO FOODS COMPANY, Denver Colorado 80211-2200 (US)
(72) Inventor: BARZ, Richard Lee, Castle Rock, CO 80104 (US); CREMER, Carolyn Parks, Denver, CO 80209 (US)
(74) Representative: VOSSIUS & PARTNER
(86) International application number: PCT/US96/02328
(87) International publication number: WO 96/25051

(56) References cited:
- EP-A- 0 515 318
- EP-A- 0 535 728
- FR-A- 2 247 981
- GB-A- 2 000 010
- US-A- 5 200 216
- US-A- 5 380 543
- PATENT ABSTRACTS OF JAPAN vol. 13, no. 408, 8 September 1989 & JP,A,01 148147 (SNOW BRAND MILK PROD CO), 9 June 1989,
- CHEMICAL ABSTRACTS, vol. 117, no. 23, 7 December 1992 Columbus, Ohio, US; abstract no. 232744, XP002004279 & JP,A,04 218 334 (ROKKO BUTTER CO) 7 August 1992

## Description

This invention relates to the preparation of a soft or semi-soft fibrous cheese, for example a mozzarella variety of cheese. In particular, it relates to a process of making such a cheese for baking purposes, for instance to be used as the exposed cheese on a pizza or as the string cheese rolled in the outer lip of a pizza crust (a so-called "stuffed crust pizza").

Soft or semi-soft fibrous cheeses are normally prepared by a process involving the following sequential steps:
a) pasteurizing cow's or buffalo milk;
b) acidifying the milk to convert it to a cheese milk;
c) coagulating the cheese milk to obtain a coagulum comprised of curd and whey;
d) cutting the coagulum and draining the whey therefrom, thereby leaving a cheese curd;
e) heating, kneading, and stretching the cheese curd until it is a homogeneous, fibrous mass of heated, unripened cheese;
f) forming the heated cheese into a shape;
g) cooling the shaped cheese in cold brine; and
h) removing the cooled cheese from the brine.

Cheeses made by this process are known under a variety of names, including mozzarella, pasta filata, provolone, scamorze, and pizza cheese. (For ease of reference, all such cheeses are referred to herein as "mozzarella variety cheeses.") The process itself is sometimes called "the pasta filata process." (See the Nov. 8, 1995 Draft New International Individual Standard for Mozzarella for the Codex Alimentarius). Some of these cheeses are referred to by some in the industry as "soft," but by others as "semi-soft." If the cheese contains not less than 20 wt.% milkfat, and not more than 60 wt.% water, it is considered a "full fat soft cheese" under the Cheese Regulations 1970 (No. 94) of the United Kingdom (Part II(5)(2)(a)).

It is known that the properties of such a cheese can be modified by spraying an aqueous solution of a flavoring additive and/or one or more other cheese chemicals, such as an emulsifying agent, on the finished cheese. Thus, for example, Barz et al. (U.S. Patent No. 5,200,216) discloses that mozzarella cheese may be comminuted, frozen, and then coated with an aqueous solution of an emulsifying agent such as sodium citrate.

In the manufacture of process cheese, emulsifying salts such as a sodium phosphate or sodium citrate are commonly used. Process cheese is prepared by heating comminuted, natural hard cheese and/or soft cheese in a mixture with 2 to 3% of an emulsifying salt in a melting process to a temperature in the range of about 80 to 95° C. (176 to 203° F.). During this melting process, the insoluble starting cheeses are converted into liquid by means of the emulsifying salt. After about 4 to 15 minutes, the molten mass is cooled and solidified. (See, for example, U.S. Patent Nos. 3,615,586, 5,466,477, and 5,470,955.)

U.S. Patent No. 5,380,543 (Barz et al.) discloses the mixing in of a minor amount (e.g., from 0.0005 to 0.01 percent) of starch during the manufacture of natural mozzarella cheese, in order to alter the bake performance of the cheese. The starch is mixed in either during the coagulum cutting step or during the heating/kneading/stretching step.

U.S. Patent No. 5,080,913 (Gamay) discloses a process for preparing a low fat cheese in which a stabilizer such as carrageenan is added to the milk before or after pasteurization, optionally in combination with dry skim milk, dried whey, flavorants, and/or other gums and casein stabilizers.

U.S. Patent No. 5,395,630 (Gamay) discloses a method of making a low fat, pasteurized, process cheese in which the starting skim milk cheese is mixed with various cheese additives and the mixture is cooked at a temperature of about 160° F. (71° C.). Among the additives disclosed are emulsifiers, stabilizers, flavorants, gums, sorbic acid, whey solids, and annoto color.

European Patent Publication No. 0 515 318 A1 (Vesely et al.) discloses a pasta filata type cheese specialty in which other ingredients such as fruit, vegetables, meat, spices, starches and the like are mixed into the cut chunks of curd prior to "roping." Examples of added ingredients are mixtures containing tomato, salmon, strawberries, frankfurters, tomato puree, sauerkraut, or ground black olives. The finished product has a smooth, thin skin, enabling the contained ingredients, which are not thoroughly mixed into the cheese, to be seen. Therefore, such ingredients have been added for visual appearance as well as taste, but there is no suggestion to use these ingredients, or other ingredients, to alter or enhance the melt characteristics of the cheese produced.

The process of the present invention employs the same well-known steps of preparing a soft or semi-soft fibrous cheese, namely:
a) pasteurizing cow's or buffalo milk;
b) acidifying the milk to convert it to a cheese milk;
c) coagulating the cheese milk to obtain a coagulum comprised of curd and whey;
d) cutting the coagulum and draining the whey therefrom, thereby leaving a cheese curd;
e) heating, kneading, and stretching the cheese curd until it is a homogeneous, fibrous mass of heated, unripened cheese;
f) forming the heated cheese into a shape;
g) cooling the shaped cheese in cold brine; and
h) removing the cooled cheese from the brine.
characterized in that between said steps (e) and (f), there is thoroughly mixed into the heated cheese a minor amount of at least one cheese additive selected from the group consisting of emulsifying agents, gums, stabilizers, colorants, dairy solids, cheese powders, and native or modified food starches, whereby, when the additive is starch alone, it is used in an amount of 0.5 to 10 percent, based on the weight of the cheese.

The term "emulsifying agent" is intended to include (but not be limited to) the chemical compounds known as sequestrants. If an emulsifying agent is used, preferably it is a cheese emulsifier that sequesters calcium ions in the cheese -- i.e., reduces the degree to which the calcium is ionically bound to the protein in the cheese. Calcium-binding emulsifying salts are preferred, particularly those selected from the group consisting of phosphates and citrates. Sodium and sodium aluminum salts are most preferred. Examples of suitable phosphates are sodium hexametaphosphate (SHMP), monosodium phosphate (MSP), sodium tripolyphosphate (STPP), and disodium phosphate (DSP). DSP is generally available in its hydrated form, disodium phosphate dihydrate. The preferred citrate emulsifier is sodium citrate, which, in solid form, is generally commercially available as sodium citrate dihydrate. The ideal amount of emulsifying agent to use will vary, depending upon its chemical identity, the intended end use of the cheese, and the other combination of cheese-making conditions employed, but it can be easily ascertained on a case-by-case basis with a slight amount of experimentation. Preferably, however, the emulsifying agent will be used at a level not exceeding what is considered to be generally recognized as safe, e.g., in an amount within the range of about 0.01 to 2%, based on the weight of the finished cheese. Often, about 0.5 to 2% of the emulsifying agent will be used, or an amount within the range of about 0.8 to 2%.

The emulsifying agent can be incorporated into the heated cheese in a dry form, but the preferred method of addition is first to make an aqueous solution of the additive, typically in the range of about 5 to 50 wt.% solids, e.g., about 20 to 40%, and then add that to the heated cheese.

The incorporation of a gum and/or stabilizer in the cheese is generally useful to bind water and firm the cheese body. Examples of suitable gums include xanthan gum, guar gum, and locust bean gum. Examples of suitable stabilizers include chondrus extract (carrageenan), pectin, gelatin, and agar. The total amount of gums and stabilizers added will generally be in the range of about 0.1 to 0.8%, based on the weight of the finished cheese. It is preferable to add a gum or stabilizer in the dry form, rather than pre-mixed with water.

The effect of adding a colorant to the cheese is to alter its natural color. This can be useful, for example, in a case where consumer acceptance will be increased by altering the natural color of the cheese. It is surprising that the addition of a colorant at this stage of the process can have beneficial results. Prior to the present invention it was thought that a colorant had to be added to the milk vat to be completely absorbed throughout the cheese.

The amount of colorant added can generally be in the range of about 0.1 to 0.5%, based on the weight of the finished cheese. Examples of suitable colorants include annoto, tumeric, titanium dioxide, and betacarotene. Preferably the colorant is added as a solution or dispersion in water.

The purpose of incorporating a dairy solid into the cheese in the process of the present invention is to firm the cheese, bind water, improve the melt appearance of the cooked cheese, and/or to increase the blistering of the cooked cheese. Examples of suitable dairy solids include whey protein, casein hydrolyzate, milkfat, and nonfat dry milk. The dairy solids may generally be included in an amount within the range of about 1 to 10%, based on the weight of the finished cheese. Although the dairy solid can be pre-mixed with water, it is generally preferable to add it in dry form.

The purpose of incorporating a cheese powder in the heated cheese at this stage of the process is to impart a different cheese flavor to the finished product. Examples of suitable cheese powders include Parmesan, cheddar cheese blend, Monterey Jack, Romano, and provolone powders. The cheese powder can generally be included in an amount within the range of about 1 to 10%, based on the weight of the finished cheese. Preferably it is added in dry form to the heated cheese.

Sometimes, when the exposed cheese on a pizza completely melts, it appears as though the cheese has been "cooked into" the sauce. To the consumer, the topping on the pizza can appear to have less cheese than is desired or expected. In the industry this is referred to as the pizza appearing "thin" or having a "poor yield." We have found that the addition of a food starch between steps (e) and (f) tends to obviate this problem. The amount is in the range of 0.5 to 10 wt.%, most commonly in the range of 1 to 4%. Preferably the starch is not mixed with water before being added to the cheese.

Suitable starches include both vegetable starches, such as potato starch, pea starch, and tapioca, and grain starches, such as corn starch, wheat starch, and rice starch. The starch can be modified or native. Suitable corn starches include dent corn starch, waxy corn starch, and high amylose corn starch.

Modified food starches differ in their degree of cross-linking, type of chemical substitution, oxidation level, degree of molecular scission, and ratio of amylose to amylopectin. Examples of some commercially available modified food starches that are generally suitable for obviating the "poor yield" problem include Mira-Cleer 516, Pencling 200, Purity 660, Batterbind SC, Penbind 100, and MiraQuick MGL. A suitable, commercially available native (unmodified) starch is Hylon V.

Mira-Cleer 516, from A. E. Staley Company, is a dent corn starch that is cross-linked and substituted with hydroxypropyl groups. The cross-linking increases its gelatinization temperature and acid tolerance. The hydroxypropyl substitution increases its water binding capability, viscosity and freeze-thaw stability. MiraQuick MGL, also from A. E. Stalev Company, is an acid-thinned potato starch. The acid thinning breaks amylopectin branches in the starch, creating a firmer gel.

Pencling 200, from Penwest Foods, is an oxidized potato starch. The oxidation increases its capacity to bind water and protein. Penbind 100, also from Penwest Foods, is a cross-linked potato starch.

Batterbind SC, from National Starch, is a cross-linked and oxidized dent corn starch. Purity 660, also from National Starch, is a cross-linked and hydroxypropyl substituted dent corn starch. Hylon V, also from National Starch, is an unmodified, high amylose corn starch.

All of the specific starches mentioned above are "cook-up" starches -- that is, they are not pre-gelatinized. Pre-gelatinized starches can also be used in the process of the present invention, however.

We have also observed that some food starches tend to affect the texture of the melted cheese as well. Use of the commercial products Mira-Cleer 516, Purity 660, and MiraQuick MGL tends to make the finished cheese softer when baked, whereas use of the commercial products Pencling 200, Batterbind SC, Hylon-V, and Penbind 100 tends to make the finished cheese firmer when baked. The use of a starch that tends to make the cheese softer when baked is especially advantageous when manufacturing a string cheese intended to be used for a stuffed crust pizza.

As indicated, the cheese additive is mixed into the heated cheese after the cheese has undergone some kneading and stretching, but before it is formed into a shape and cooled in brine. Preferably the cheese will be at a temperature of no more than about 160° F. (71° C.), e.g., in the range of about 110 to 160° F. (43 to 71° C.) when the additive is added to it. The temperature is most preferably below that of pasteurization (65° C., 150° F.), for example in the range of about 110 to 145° F. (43 to 63° C.), and the temperature of the cheese is preferably not subsequently raised to as high as pasteurization temperature.

The heating, kneading, and stretching of the cheese curd is typically done in a piece of equipment called a mixer/cooker. Then the heated, fibrous mass is extruded into a desired shape and deposited into a tank of cold brine. In the present process, a separate piece of mixing equipment can be installed between the mixer/cooker and the extruder. For example, a jacketed mixer, with twin screw augers arranged such that they overlap, ensuring thorough mixing, can be used. It will preferably include an inlet port at the head of the mixing path for addition of the cheese additive. The size and configuration of such equipment are preferably such that the dwell time of the heated cheese in the mixer is in the range of about 2 to 10 minutes, and the flow of cheese from the equipment used to heat and stretch the curd to the extruder is continuous.

Steps (a) through (h) of the above-described process are known to those skilled in the art. Preferably, these steps will be controlled and performed so that the finished cheese, after removal from the brine, will have a moisture content in the range of about 45 to 60 wt.% and a milkfat content of at least 30 wt.% (on a dried solids basis).

Step (b), the milk acidification step, can be performed either microbially or directly. Microbial acidification is accomplished by the addition of a starter culture of one or more lactic acid-producing bacteria to the milk, and then allowing the bacteria to grow and multiply. Direct acidification is faster and is accomplished by the addition of a GRAS acid, such as, for example, acetic acid (e.g., as vinegar), phosphoric acid, citric acid, lactic acid, hydrochloric acid, sulfuric acid, or glucoso-delta-lactone (GDL) to the milk.

After the incorporation of the cheese additive, the still-warm cheese (e.g., at a temperature in the range of about 100 to 135° F. (38 to 57° C.)) can be formed into any desired shape. Typically, it will be extruded at that temperature in a continuous ribbon, which is discharged into a cold sodium chloride brine channel or tank, for example as described in U.S. Patent No. 4,339,468 to Kielsmeier or U.S. Patent No. 5,200,216 to Barz et al.,

The cheese ribbon is preferably contacted with cold sodium chloride brine (in one or more tanks or vessels) until its core temperature drops to about 75° F. (24° C.) or below. Then the cooled ribbon is cut into segments.

If the product is string cheese, e.g., having a diameter of about 1/4 to 3/4 inch (0.6 to 2 cm.), the segments of the ribbon will generally be about 1-1/2 to 8 inches (4 to 20 cm.) long. If the string cheese is not to be baked, or if it is to be baked only while enclosed in pizza crust, e.g., in a stuffed crust pizza, it will generally not be necessary to age the cheese before using it. If desired, the string cheese may be frozen and stored.

If it is intended to use the cheese as exposed topping for a pizza, then the continuous ribbon, which will preferably be rectangular in cross section, may be cut into loaves, for example having a width of about 12 to 36 inches (30 to 91 cm.), a height of about 1/2 to 2 inches (1.3 to 5 cm.), and a length of about 14 to 24 inches (36 to 61 cm.). The loaves can then be further cooled in sodium chloride brine, for example to a core temperature in the range of about 28 to 45° F. (-2 to 7° C.), and then removed from the brine and comminuted, and the pieces individually quick frozen, for example by the process described in U.S. Patent No. 5,030,470 to Kielsmeier, et al..

Depending on the composition of the cheese, it may be preferable to store it for a time (e.g., about 7 to 21 days, at about 35 to 45° F. (2 to 7° C.)) after it is removed from the last brine tank and before it is comminuted and frozen. However, as described in U.S. Patent No. 5,200,216 (Barz et al.), if the process is controlled so that the cooled cheese removed from the brine has a moisture content of about 45 to 60 wt.%, a milkfat content of at least about 30 wt.% (dried solids basis), and a combined moisture and wet milkfat content of at least about 70 wt.%, the cheese can be frozen immediately and will still perform satisfactorily when baked on a pizza, under a variety of conditions.

When an emulsifying agent is used, the process of the present invention enables one to prepare a soft or semi-soft fibrous cheese that can provide optimum baking performance over a wider range of conditions than can cheese in which an emulsifying agent is not incorporated, or in which the emulsifying agent is incorporated only by being coated on the finished cheese particles. This is important, because the pizza industry, as well as other users of soft or semi-soft fibrous cheeses, has been increasing the variety of prepared foods in which such cheeses need to be baked. Also, an increasing variety of baking equipment and conditions are being used. In the pizza industry, for example, the crust may be thin, thick, or in between; the cheese may be exposed or wrapped in the edge of the crust; and the crust may be completely uncooked or it may be parbaked before being put in the oven with the cheese. In addition, oven types and temperatures vary from one pizza restaurant to another. Some baking operations require relatively high oven temperatures (e.g., in the range of about 600 to 750° F. (315 to 399° C.)) with short baking times (e.g., in the range of about 5 to 10 minutes). Such conditions may be used, for instance, in an impingement oven when baking a pizza having a thin crust. Contrastingly, a pizza restaurant might use a relatively long bake time (e.g., about 12 to 20 minutes and a correspondingly lower oven temperature (e.g., about 450 to 550 °F. (232 to 288° C.)). Such conditions are more commonly employed in deck ovens, when making thick-crust pizzas.

Prior to the present invention, a cheese manufacturer could usually design a soft or semi-soft fibrous cheese that would suit any particular set of baking conditions, for example by altering the moisture or milkfat content of the cheese or the length of time the cheese is stored at above-freezing temperatures before it is shipped. Different combinations of these variables could be selected to groom the cheese for optimum performance for a particular set of baking conditions. However, it has been generally true until now that a cheese that is optimum for one set of baking conditions, or a particular type of product, will be less than satisfactory for some other set of baking conditions or product type.

In addition, when using a particular set of these cheese-making variables in order to achieve optimum baking performance under a particular set of conditions, a drawback sometimes experienced is that the handling properties of the cheese are less than satisfactory. If the cheese needs to be comminuted (e.g., diced or shredded) before it is used, for example as the exposed cheese on a pizza crust, it needs to have a certain minimum firmness in order for the comminuting process to proceed efficiently. Also, once comminuted, the particles need to flow relatively freely, to permit the cheese to be portioned out accurately and easily. Either or both of these characteristics can be adversely affected by selecting the set of conventional cheese-making variables that is best suited for a particular baking demand. We have experienced poor handling properties, for example, when trying to prepare a mozzarella variety cheese for use under cook conditions in which minimal heat reaches the cheese. By judicious selection of conditions such as moisture and fat content we have been able to make a mozzarella that bakes perfectly (ideal blister size, coverage, color, and integrity, and good stretch and texture) on a thick-crust pizza at an oven temperature of about 500° F. (260° C.). However, the cheese does not handle well, in that it is too soft to comminute, resulting in poor cut integrity and difficulty in measuring out the cheese by use of portion cups.

We have found that the process of the present invention, when used to incorporate an emulsifying agent at the particular stage in the cheese-forming process as described above, allows one to make a soft or semi-soft fibrous cheese that can perform optimally under a broader variety of baking conditions. Moreover, these desirable baking properties can be attained without significant degradation of the cheese's handling properties. Thus, by incorporation of the appropriate amount of emulsifying agent, one can achieve a cheese that will bake very well on top of a pizza, even under such difficult conditions as the combination of a thick crust, long baking time, and deck style oven, yet still be relatively easy to comminute and pour. (Deck style ovens are normally a poor choice for baking a pizza under these conditions, because they produce radiant and conductive heat, which is relatively slow to raise the temperature of the cheese. Impingement ovens, which heat mostly by forced air convection, generally perform better when baking a thick-crust pizza. But impingement ovens are relatively expensive, and many pizzerias are only equipped with deck ovens.)

Also, by the process of the present invention a string cheese can be prepared that performs better as a stuffing cheese for stuffed crust pizzas than many other cheeses that are generally commercially available in string form. In a stuffed crust pizza, a mozzarella-style string cheese is rolled into the edge, or "lip," of the pizza dough prior to baking. The pizza is then prepared in the traditional manner, with sauce, exposed cheese, etc. Upon baking the pizza, both the cheese enclosed in the crust and the exposed cheese are supposed to melt, such that it loses its original shape, and it is supposed to exhibit excellent "stringy" characteristics. When the pizza is cut into slices, the stuffing cheese must not be runny, else it will quickly flow out of the crust while it is hot. The cheese may become soft enough to very slowly ooze out of the crust, but it should not become so fluid that it runs out before the slice can be lifted to the mouth. And once the pizza has cooled somewhat, the string cheese in the lip of the crust should keep its stringy characteristics, so that when it is bitten into, the cheese will not break off sharply. The process of the present invention, when used to incorporate an emulsifying agent in the cheese, is ideally suited for making such a string cheese.

Figures 1 through 6 are photographs of actual pizzas made in a comparative test described later herein, as Example III. The pizzas of Figures 1, 2, 3, and 5 were baked using cheese made by prior art processes. The pizzas of Figures 4 and 6 were baked using cheese made by the process of the present invention.

Figure 7 is a schematic representation of equipment that can be used to practice the process of the present invention.

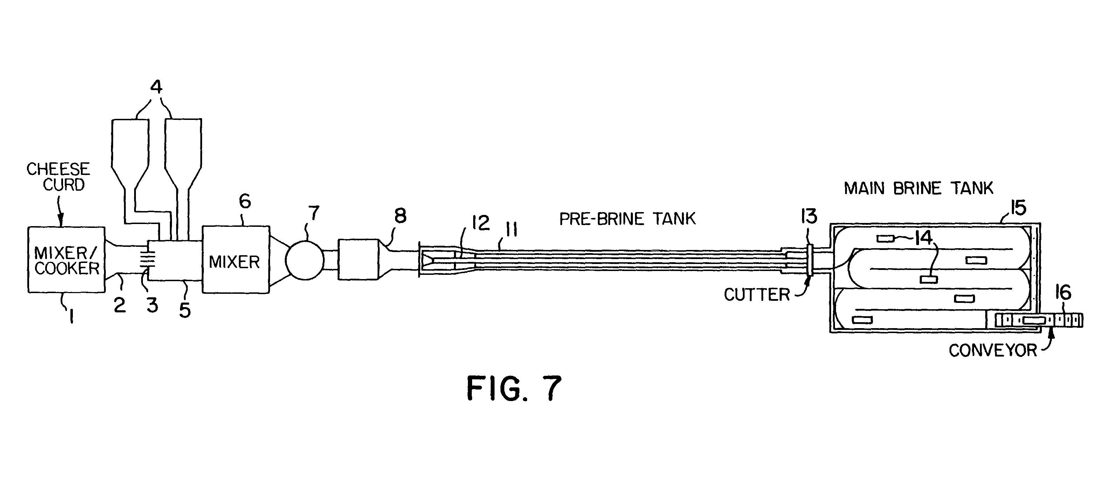

Referring to Figure 7, fermented cheese curd is heated in mixer/cooker 1, while being kneaded and stretched to produce molten cheese. The resulting molten cheese is extruded through a transfer tube 2 to form an extruded ribbon of molten cheese. Slitters 3 form grooves in the extruded ribbon of molten cheese. The grooved, extruded ribbon is fed into an additional mixer 6, such as, e.g., a jacketed mixer having overlapping twin screw augers. Disposed between the slitters 3 and the additional mixer 6 is an inlet chamber 5 that enables liquid/dry ingredient applicators 4 to add one or more desired ingredients, e.g., dry starch from one and an aqueous solution of an emulsifying agent from the other, into the ribbon grooves formed in the molten cheese by the slitters 3. The added ingredients are thoroughly mixed into the molten cheese by the additional mixer 6. Positive pump 7 forces the resulting mixture through a transfer tube 8 to form a continuous ribbon 12 of molten cheese. The extruded continuous ribbon 12 of molten cheese flows into "super cold" sodium chloride brine contained in pre-brine tank 11. Cutter 13 cuts the continuous ribbon 12 into cheese loaves 14 as the continuous ribbon 12 exits the pre-brine tank 11. The cooled, salted cheese loaves 14 float in main brine tank 15 until conveyor 16 removes the loaves 14 from the main brine tank 16. The loaves 14 may then undergo further processing as desired.

In the following examples, unless otherwise indicated, all percentages are by weight.

### Example I

A mozzarella variety cheese was manufactured by the process described in Barz et al. (U.S. 5,200,216) using cow's milk. The process conditions were such that the final product had a moisture content of 53.5%, FDB (fat on a dry basis) of 47.1%, a pH of 5.25, and a salt content of 1.40%. The cheese curd was heated to 120° F. (49° C.), stretched, and kneaded, all in a mixer/cooker. Approximately one-half of the batch was then supplemented with sodium hexametaphosphate (SHMP), by passing the cheese through a twin screw auger mixer while adding a 50 wt.% aqueous solution of SHMP at a dosage level of one (1) percent SHMP, based on the weight of the cheese. While the temperature of the cheese was held at 120° F. (49° C.), the SHMP solution was thoroughly mixed into the cheese by the action of the twin screws. The average residence time of the cheese in the auger mixer was approximately two (2) minutes. Upon leaving the auger mixer, the cheese was formed into a ribbon, cooled in brine, cut into blocks, comminuted, and individually quick frozen, all as described by Barz et al. (U.S. 5,200,216).

The other half of the batch of molten cheese was finished in a similar manner, but excluding the addition of the SHMP.

Both products were thawed for three days and then cooked on a thick crust pizza, a style of pizza in which desired performance characteristics are often not achieved, due to the relatively low cheese temperatures achieved during cooking. The cheese manufactured without the addition of SHMP did not exhibit the desired, and typical, melt characteristics, in that it lacked meltdown, stretch and browning/blistering, which are expected for mozzarella cheese. The new product, with the addition of the SHMP, did exhibit the desired characteristics. Both cheeses would perform well in some other applications, however -- for example when baked on the more conventional thin crust pizza, at an oven temperature of, say, about 480° F. (249° C.)).

### Example II

Beginning with cow's milk, a mozzarella-like string cheese was produced using the manufacturing process outlined in Kielsmeier et al. (U.S. Patent No. 3,961,077). The final composition of the product was 52.5% moisture, FDB of 38.6%, pH of 5.20, and a salt content of 2.3%. After the heating/stretching of the curd into a molten mass, 0.8% SHMP (in a 50% aqueous solution) was mixed into one-half of the cheese, at a temperature of 110° F. (43° C.), using the twin screw auger mixer at a residence time of 2 minutes. Then the mixture was formed into a string cheese product. The other half of the molten cheese batch had no emulsifier mixed into it. The products were separately formed into cylinders of approximately 5/8" inch (1.6 cm.) diameter and a length of 7-5/8 inches (19 cm.). Then they were brined and chilled in a 10° F. (-12° C.) brine for twenty minutes, following which they were frozen using a frozen carbon dioxide freezer chamber. Both products were then thawed for three days, after which they were rolled into the outer crust (lip) of a pizza and baked under typical pizzeria cook conditions. The resultant products differed significantly, in that the product without the SHMP did not melt, nor did it stretch. It remained virtually intact, making it unacceptable for this application. The string cheese with the SHMP, however, displayed the desired melt and stretch characteristics, allowing the string cheese to be successfully used as the stuffing cheese for a stuffed crust pizza.

### Example III

Tests were designed to compare the baking properties of, on the one hand, a mozzarella variety cheese and a mozzarella-like string cheese made by the process of the present invention to, on the other hand, a mozzarella variety cheese and a mozzarella-like string cheese made by prior art methods.

### Preparation of the Cheeses

### Sample 1 (Standard Mozzarella):

This was a standard non-aged mozzarella variety cheese, made from cow's milk without the addition of any emulsifying agent. It was made by the process described in U.S. Patent No. 5,200,216 (Barz et al. '216). After removal from the brine tank, the cheese was diced and individually quick frozen according to the method described in U.S. Patent No. 5,030,470 (Kielsmeier et al. '470). The frozen, diced cheese was held at 0° F. (-18° C.) until three days prior to use, when it was placed in a refrigerator that was held in the temperature range of about 35-40° F. (2-5° C.). At the end of the three days, the cheese was completely thawed. The cheese had a moisture content of 53.0 wt.%, a fat content of 47.0 wt.% (dry basis), a salt content of 1.4 wt.%, and a pH of 5.25.

### Sample 2 (Process Mozzarella Cheese With Sodium Citrate):

This was a mozzarella flavor pasteurized process cheese, obtained from Schreiber Foods, Inc., of Green Bay, Wisconsin. The ingredient and nutrition statement indicated that the cheese had been made from a mixture of natural cheddar and mozzarella cheeses and that it contained the emulsifying salt sodium citrate. The amount was not revealed, but it is well known in the cheese industry that sodium citrate is used at a level of about 2 to 3 weight percent when making process cheese. Three percent (3%) is the maximum level permitted under U.S. regulations for a process cheese. Again, although the ingredient and nutrition statement did not indicate at what stage the emulsifier was added, it is well known that process cheese is made by mixing the emulsifying salt into melted hard or soft cheese at a temperature in the range of about 80 to 95° C. During this melting process, the insoluble starting cheeses are converted into liquid by means of the emulsifying salt. After about 4 to 15 minutes, the molten mass is cooled and solidified.

The cheese had been pre-sliced into 3 inch (7.6 cm.) square, 1/8 inch (0.3 cm.) thick slices. It was stored at 40° F. (4° C.) until time of use. The slices were crumbled into small pieces before being placed on the pizza.

### Sample 3 (Mozzarella With Sodium Citrate Coating):

This was the same cheese as Sample 1, but with a coating of 0.2 wt.% sodium citrate on the cheese particles. The coating was applied by the spraying method described in Kielsmeier '470, using water having dissolved therein 8 wt.% sodium citrate dihydrate.

### Sample 4 (Mozzarella of Invention With Sodium Citrate Added at 55° C. After Stretching):

This cheese was prepared by the method of the present invention, using a portion of the same batch of cheese curd as was used to make Sample 1. Following the procedure disclosed in Barz et al. '216, the cheese curd was heated, kneaded, and stretched until it was a homogeneous, fibrous mass of mozzarella variety cheese. While the cheese was kept warm (at 130° F. (55° C.)) a 30 wt.% aqueous solution of sodium citrate dihydrate was mixed thoroughly into the molten cheese in an amount sufficient to provide a sodium citrate concentration of approximately 0.2 wt.%. After removal from the brine tank, the cheese was diced and individually quick frozen according to the method of Kielsmeier et al. '470. The cheese had the same moisture, fat, and salt contents as Sample 1, and was handled the same way as that sample prior to testing.

Sample 5 (Mozzarella With SHMP Coating): This cheese was from the same batch as Samples 1 and 3, and was treated in the same manner as Sample 3, except that, instead of using sodium citrate, the cheese was coated with 0.35 wt.% of sodium hexametaphosphate, supplied as a 50 wt.% aqueous solution.

### Sample 6 (Mozzarella of the Invention With SHMP Added at 55° C. After Stretching):

This cheese was from the same batch of curd as Samples 1 and 4, and was prepared in the same manner as Sample 4, except that, instead of sodium citrate, 0.35 wt.% of sodium hexametaphosphate (supplied as a 50 wt.% aqueous solution) was mixed into the molten cheese.

Sample 7 (String Mozzarella): Part-skim mozzarella cheese curd was manufactured using the procedure described in U.S. Patent No. 3,961,077. The curd was held overnight at 60° F. (16° C.)). The next day, the curd was heated, kneaded, and stretched and salt was added to it. The molten cheese was extruded into cold sodium chloride brine as a continuous cylinder having a diameter of about 5/8 inch (1.6 cm.). This string was chopped into segments 7-5/8 inches (19 cm.) long and then individually quick frozen. The frozen strings were held at 0° F. (-18° C.) until ready for testing. Then they were moved to a 35-40° F. (2-7° C.) refrigerator, where they were held for three days, during which time they completely thawed. The cheese had a moisture content of 52.5 wt.%, a fat content of 38.0 wt.% (dry basis), a salt content of 2.3 wt.%, and a pH of 5.25.

### Sample 8 (String Mozzarella of the Invention With SHMP Added at 55° C. After Stretching):

This cheese was prepared by the method of the present invention, using a portion of the same batch of cheese curd as was used to make Sample 7. In this preparation, however, after the cheese curd was heated, kneaded, and stretched, and while it was kept warm (at 130° F. (55° C.)), a 50 wt.% aqueous solution of SHMP was mixed thoroughly into the molten cheese in an amount sufficient to provide a SHMP level of approximately 0.8 wt.%. The cheese had the same moisture, fat, and salt contents as Sample 7, and was handled in the same manner prior to testing.

### Method of Testing

Each sample of comminuted cheese was evaluated as a topping on a 12-inch (30.5 cm.) diameter pizza, baked in a pan in a Blodgett deck oven at 500° F. (260° C.) for 9 minutes. The crust, weighing 17.5 oz. (496 g.), had previously been par-baked -- i.e., placed in a 350° F. (177° C.) conveyor oven for three minutes. Each pizza had 4.0 oz. (113 g.) of tomato-base pizza sauce applied and 8.0 oz. (227 g.) of the test cheese sprinkled on top of the sauce. Nine minutes was the required length of time for the crust to be correctly baked. This combination of pizza style (a relatively thick crust) and type of oven (a relatively low temperature) represents perhaps the most difficult set of conditions for achieving ideal results simultaneously in all of the different baking performance categories, i.e., blistering, oil-off, meltdown, stretch, etc.

As for the string cheese samples, these were rolled into the outer rim of unbaked pizza dough, to make a stuffed crust pizza. Six lengths of the string cheese were used per pizza, to make a continuous ring, encased in dough. The total dough weight per pizza was 25 oz. (709 g.), and the finished pizza diameter was 12 inches (30.5 cm.). The amount of pizza sauce used was 4.0 oz. (113 g.), while the amount of comminuted, non-test mozzarella that was sprinkled over the top of the pizza sauce was 9.9 oz. (281 g.). The pizza, with the string cheese rolled into the outside rim, was baked in a pan in a Blodgett Master Therm Oven at 480° F. (249° C.) for 8 minutes (the required time for optimum condition of the crust).

### Evaluation of Performance

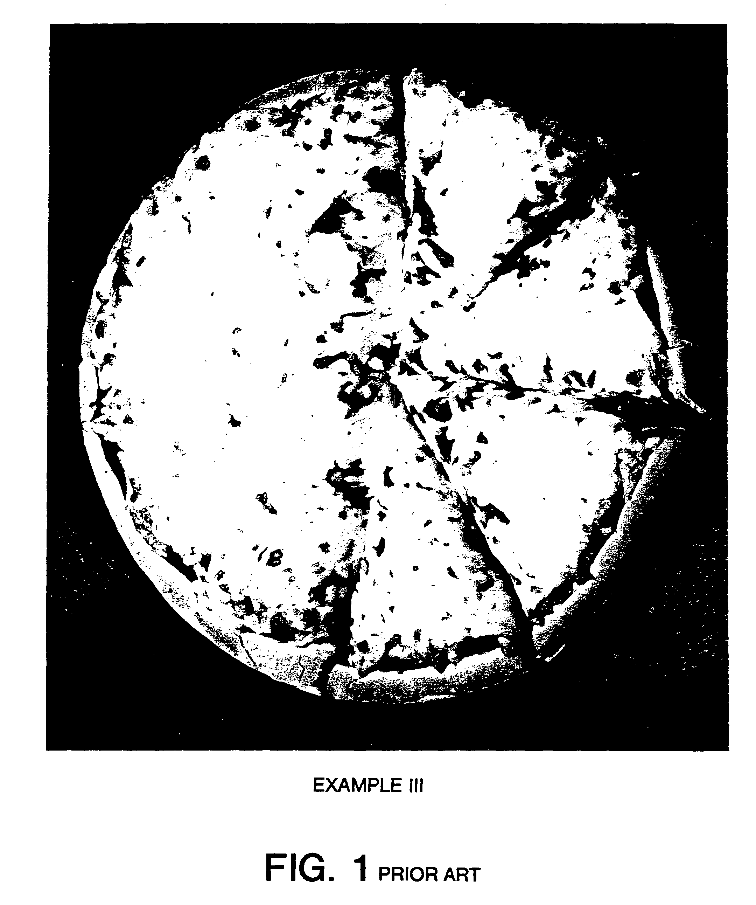

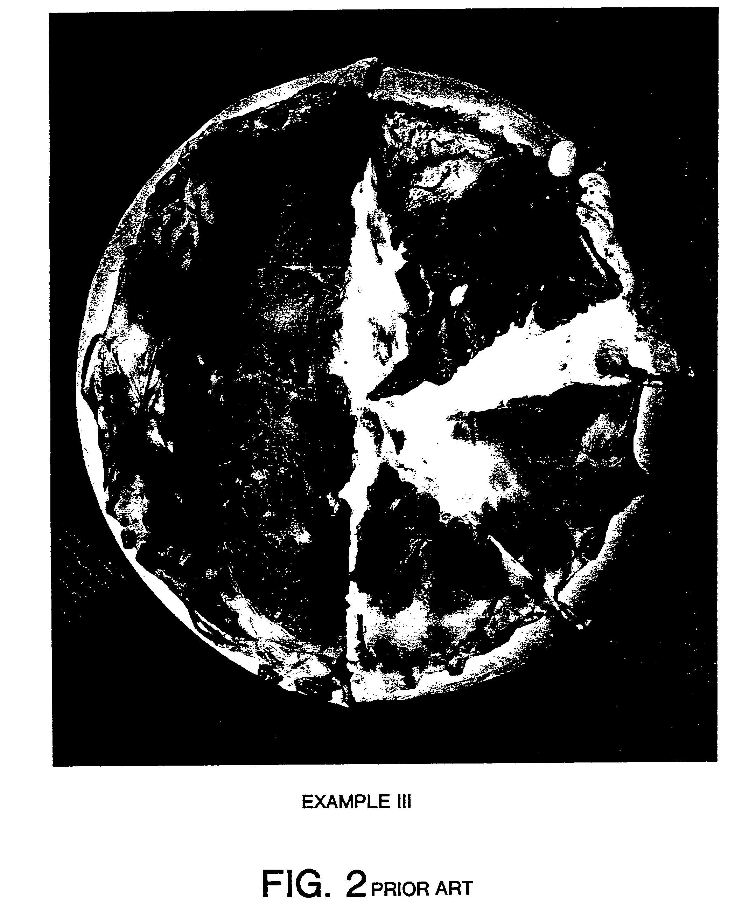

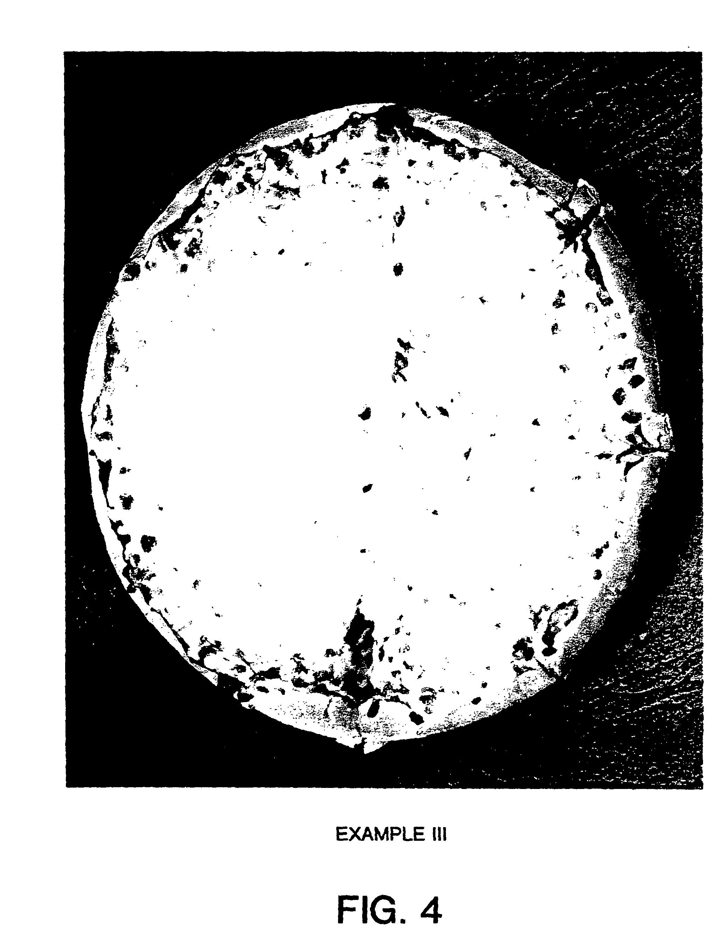

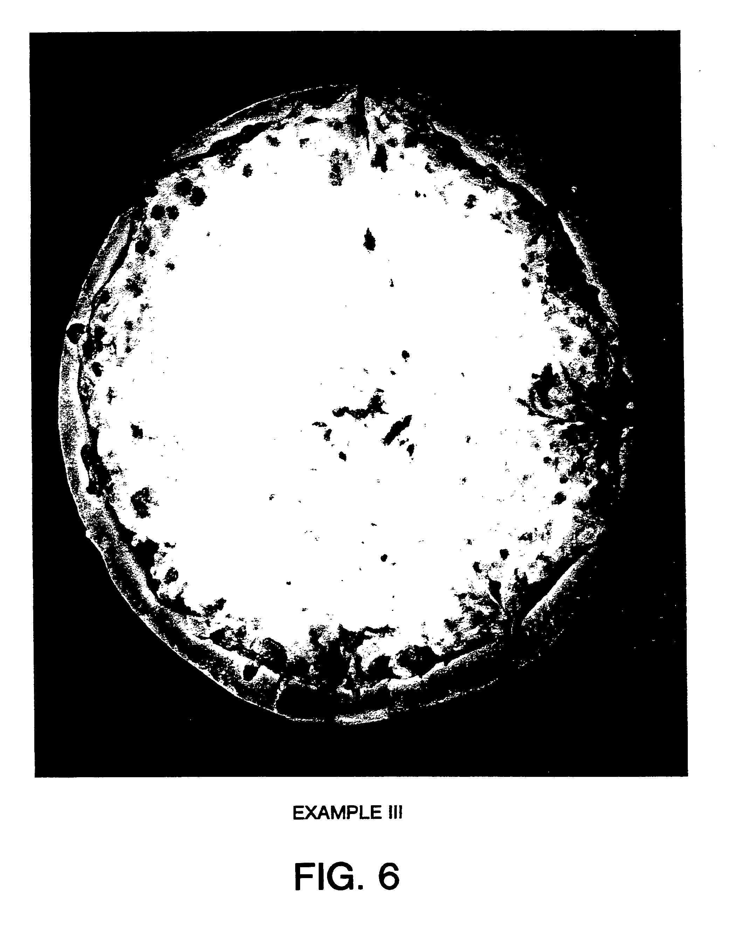

When used in comminuted form, sprinkled on top of the pizza sauce, each test cheese was evaluated for extent of blistering, the size of the blisters, the color of the blisters, the integrity of the blisters (whether isolated or run together), the degree of oiling off, melt performance, and stretchability. Photographs of the six resultant pizzas constitute Figures 1-6 of the drawings accompanying this specification. Figure 1 is a photograph of the pizza made with the "Sample 1" cheese described above. Figure 2 is a photograph of the pizza made with the "Sample 2" cheese, and so forth.

When used in the string form, as stuffing cheese, each sample was evaluated in terms of its stretchability and texture. Since neither of these qualities is easy to demonstrate visually, no photographs of these two pizzas are provided.

Below is the grading chart that was used. A perfect cheese would be one that scored "A" in all performance categories.

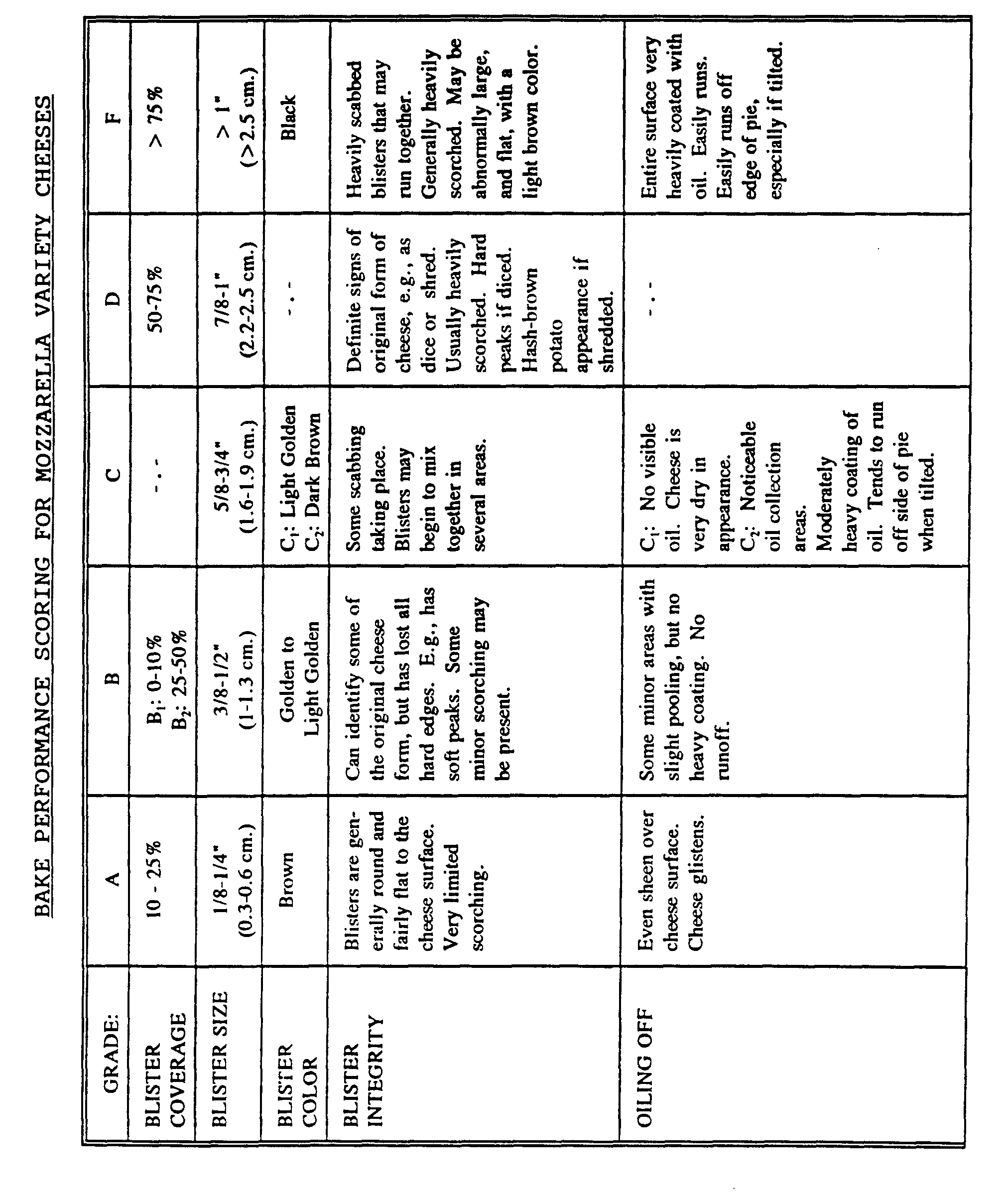

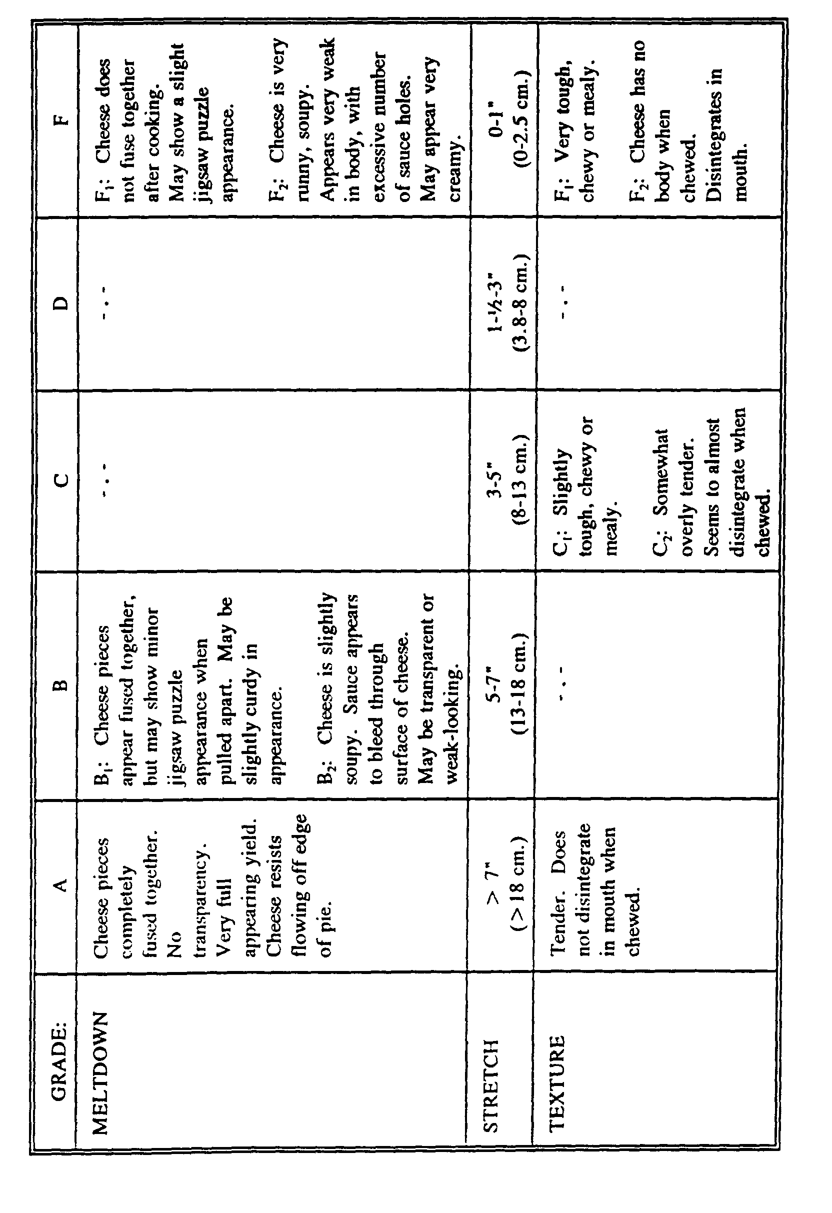

### Test Results

The results of the tests are tabulated and shown in the following table:

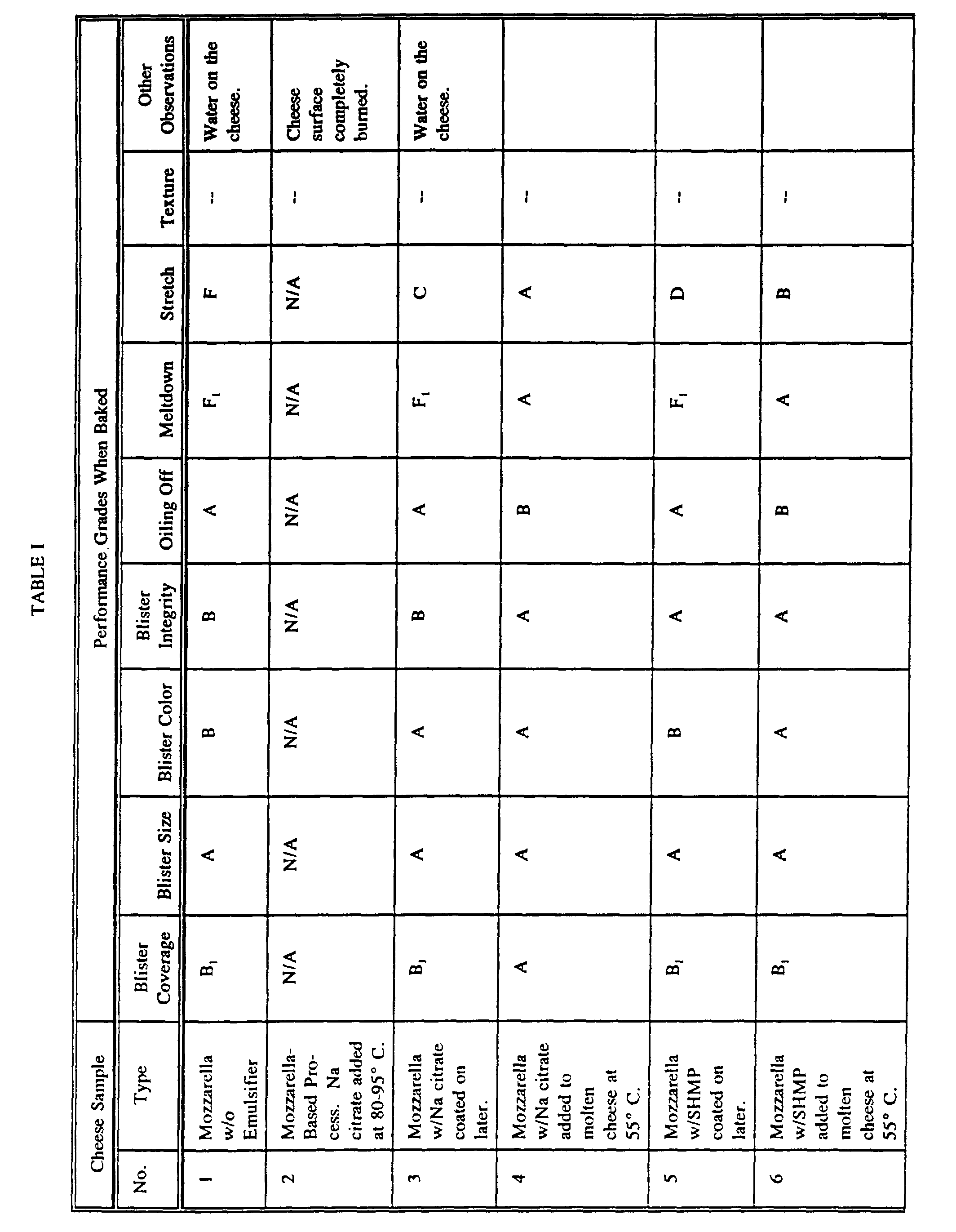

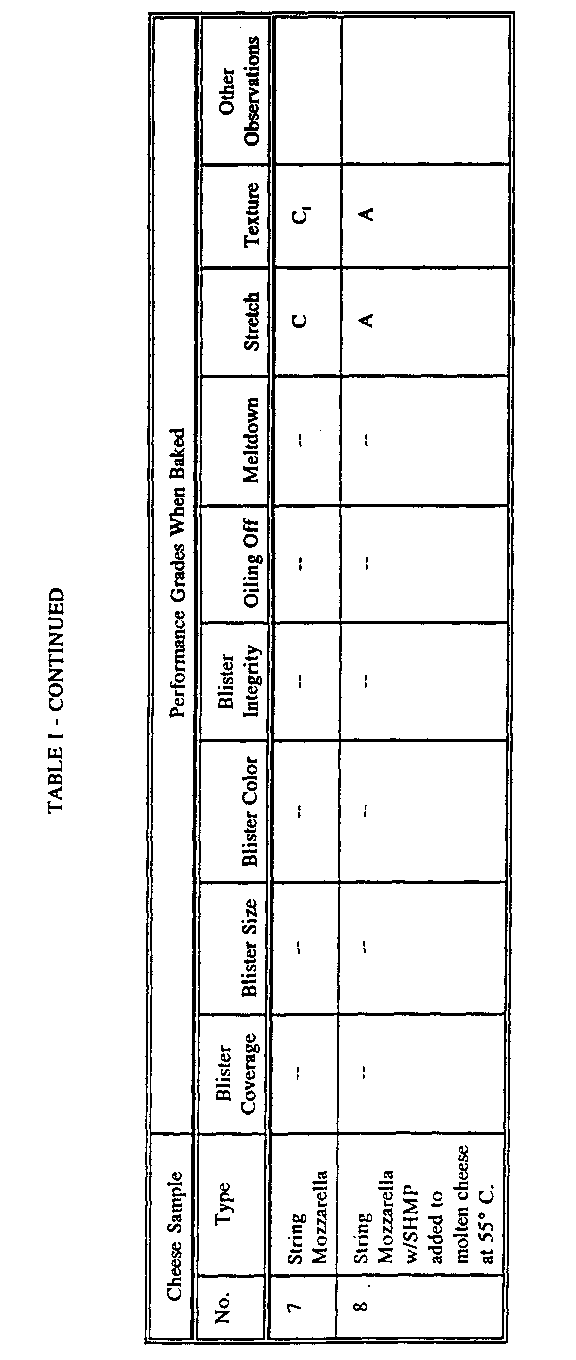

The test results indicate that the three cheeses prepared by the process of the present invention, Sample Nos. 4, 6, and 8, performed demonstrably better than all of the other cheeses in the test.

Sample No. 1, the mozzarella variety cheese without any emulsifying agent, while a perfect cheese for some pizza-baking conditions, exhibited poor meltdown and stretch properties (it earned F's for both categories) when used under the conditions of this test, i.e., a relatively low baking temperature and a thick crust. The cheese particles were not fused together after baking (they largely retained their original shred shape -- see Figure 1), and the cheese would not stretch more than one inch (2.5 cm.). Moreover, there was standing water on the cheese.

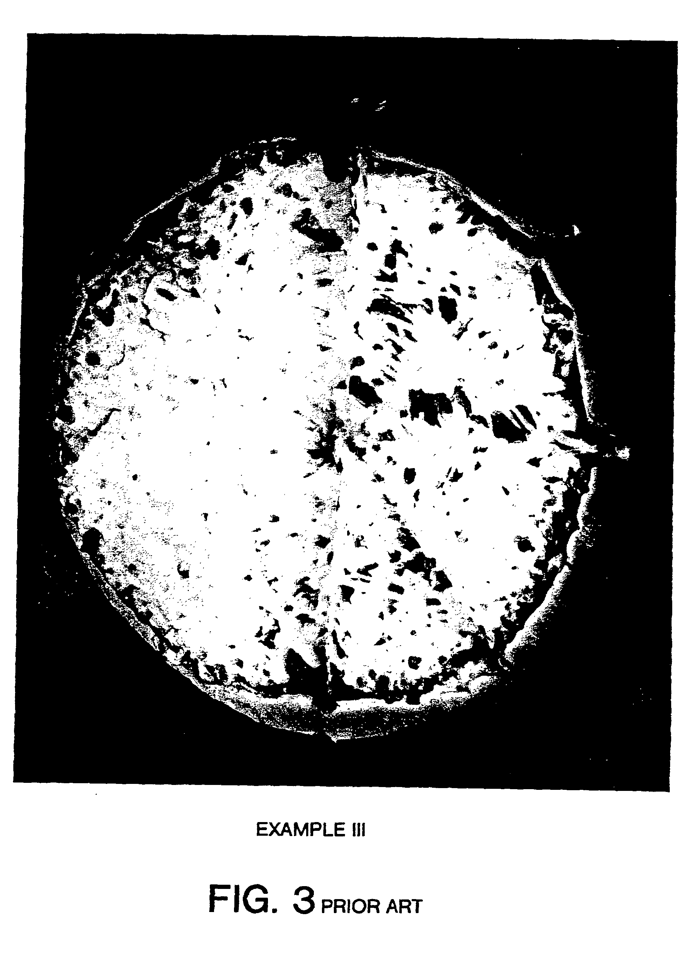

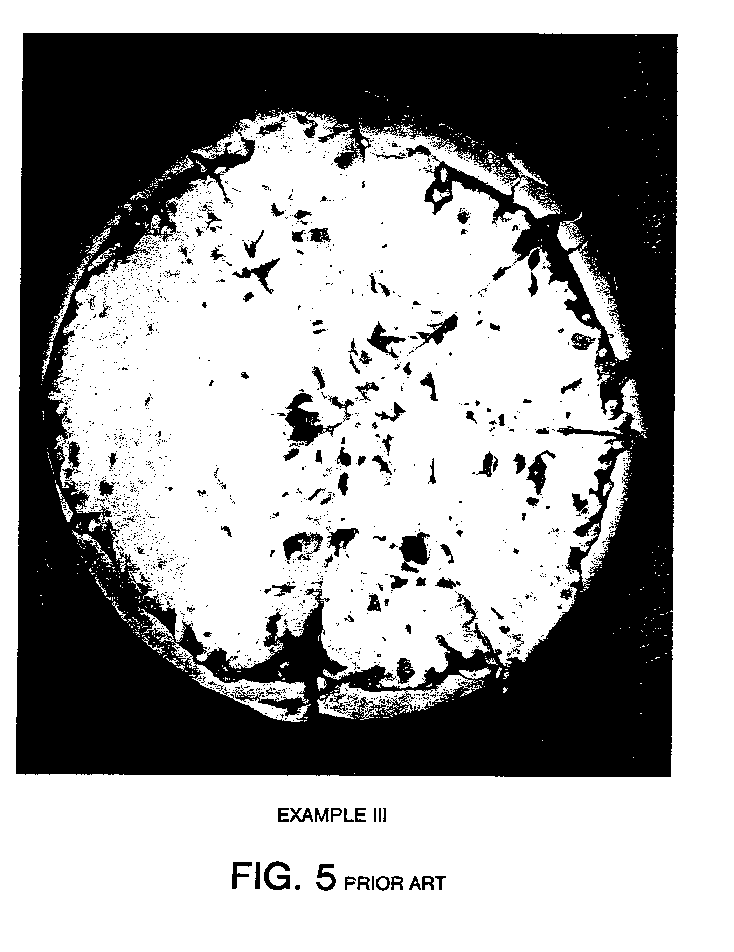

Samples 3 and 5 illustrate that when an emulsifying agent was coated on the diced cheese, the stretchability was improved somewhat (to a grade of C and a grade of D), but not the meltdown properties. Still the shredded cheese particles would not fuse together well, earning both cheeses a grade of F for meltdown. (See Figures 3 and 5.) As for the water problem, that was corrected in Sample 5, but not in Sample 3.

Sample 2 demonstrates that when the emulsifying agent is added in the way that is employed for making mozzarella-base process cheese (at a temperature in the range of about 80 to 95° C.) the product is totally unsuitable for use as pizza cheese under the test conditions. The surface of the cheese burned completely. (See Figure No. 2.)

Only by incorporating the emulsifying agents in the manner of the present invention (Samples 4 and 6) were we able to improve the standard mozzarella variety cheese of Sample No. 1 to the point where it earned acceptable grades for meltdown and stretchability (three A's and one B), as well as A's and B's for all of the other baking performance categories.

The prior art string mozzarella cheese, Sample No. 7, scored only C's for stretchability and texture. It stretched about 3 to 5 inches (8-13 cm.), was slightly tough to chew, and had a mealy texture. When that same cheese was prepared by the process of the present invention, with sodium hexametaphosphate added to the molten cheese at 130° F. (55° C.), after the cheese had been heated, kneaded, and stretched (Sample 8), both scores improved to A's. The cheese stretched greater than 7 inches (18 cm.), was tender, but did not disintegrate in the mouth when chewed.

Without wishing to be bound by theory, we believe that the reason cheese produced by the process of the present invention performs differently when baked, from mozzarella-based process cheese, may, at least in part, be due to the different protein structure of the two cheese compositions at the time of the blending in of the emulsifying agent. In the present process the curd has not undergone the proteolysis that process cheese has undergone at that stage. Also, it is believed that the use of a lower temperature to incorporate the emulsifying agent in the present process may be another reason for the improved results vis-a-vis mozzarella-based process cheese, in which the cheese composition is heated to a temperature of about 80 to 95° C. when the emulsifier is mixed into it.

### Example IV

A similar comparison to those described in Example III was performed with respect to the co-addition of a modified food starch and the emulsifying salt SHMP. Two cheeses were compared: a cheese like that of Sample 1 in Example III above and a cheese prepared as in Sample 6, but with 1.5 wt.% of Mira-Cleer® 516 modified corn starch mixed into the cheese, along with the 0.35 wt.% of SHMP. The starch was added in dry form. The SHMP was added as an aqueous solution. Each cheese had a moisture content of 53.0 wt.%, 47% FDB, a salt content of 1.8 wt.%, and a pH of 5.25. Each cheese was evaluated on a thin-crust pizza, using 14 oz. (397 g.) of dough on a 12-inch (30.5 cm.) pizza, with 4.0 oz. (113 g.) of tomato sauce and 5.0 oz. (142 g.) of the shredded cheese. The pizza was cooked in a Blodgett deck oven for 8.5 minutes at 500° F. (260° C.). This is the type of pizza in which the poor yield problem most often appears -- namely, a thin-crust pizza with a relatively small portion of cheese.

Both cheeses performed well in bake performance categories described in the scoring chart presented above -- i.e., blister coverage, blister size, blister color, blister integrity, oiling off, meltdown, and stretch. The only difference in their grades was for oiling off. Whereas the control scored a "B" (some minor areas with slight pooling), the cheese prepared by the process of the present invention scored an "A." The more important difference, however, was in the improvement of apparent yield. Whereas the control cheese yielded a finished pizza in which the cheese was melted into the sauce, in the pizza made with the cheese produced by the present process, with starch and SHMP incorporated between steps (e) and (f), the baked cheese looked creamier and fuller and rode above the sauce.

Cheese produced by the process of the present invention will generally retain its good baking properties regardless of whether it is frozen after it is removed from the brine tank. If desired, the cheese can be kept in an unfrozen state and packaged in airtight packages that have been flushed with nitrogen and/or carbon dioxide to prevent spoiling.

## Claims

1. A process of manufacturing a soft or semi-soft fibrous cheese comprising the following steps:
a) pasteurizing cow's or buffalo milk;
b) acidifying the milk to convert it to a cheese milk;
c) coagulating the cheese milk to obtain a coagulum comprised of curd and whey;
d) cutting the coagulum and draining the whey therefrom, thereby leaving a cheese curd;
e) heating, kneading, and stretching the cheese curd until it is a homogeneous, fibrous mass of heated, unripened cheese;
f) forming the heated cheese into a shape;
g) cooling the shaped cheese in cold brine; and
h) removing the cooled cheese from the brine;
**characterized in that** between said steps (e) and (f), there is thoroughly mixed into the heated cheese a minor amount of at least one cheese additive selected from the group consisting of emulsifying agents, gums, stabilizers, colorants, dairy solids, cheese powders, and native or modified food starches, whereby, when the additive is starch alone, it is used in an amount of 0.5 to 10 percent, based on the weight of the cheese.

2. The process of Claim 1 wherein the cheese is maintained at a temperature of no more than about 71°C (160 °F) while the cheese additive is mixed in.

3. The process of any of the above claims in which an emulsifying agent, alone or in admixture with one or more other cheese additives, is mixed into the heated cheese between steps (e) and (f), in an amount of 0,01 to 2 percent, based on the weight of the cheese.

4. The process of any of the above claims wherein the emulsifying agent is an emulsifying salt.

5. The process of any of the above claims wherein the emulsifying agent is a phosphate or citrate salt.

6. The process of any of the above claims wherein the emulsifying agent is a sodium salt.

7. The process of any of Claims 3-6 wherein the emulsifying agent is mixed into the cheese in the form of an aqueous solution containing 5 to 50 percent of the emulsifier, based on the weight of the solution.

8. The process of any of the above claims wherein, after step (h), the cheese has a moisture content in the range of 45 to 60 weight percent and a milkfat content of at least about 30 weight percent, on a dried solids basis.

9. The process of any of the above claims wherein the temperature of the cheese is maintained in the range of about 43 to 71 °C (110 to 160 °F) while the cheese additive is mixed into the cheese.

10. The process of any of the above claims wherein the cheese additive is mixed into the heated cheese for a period of time ranging from 2 to 10 minutes, before the cheese is formed into a shape.

11. The process of any of the above claims wherein the emulsifying agent is selected from the group consisting of sodium hexametaphosphate, monosodium phosphate, disodium phosphate, sodium tripolyphosphate, and sodium citrate.

12. The process of any of the above claims wherein, in step (f), the heated cheese is formed into a shape by being extruded into cold sodium chloride brine and, in step (g), the cheese extrudate is held in cold sodium chloride brine until its core temperature drops to about 24 °C (75 °F) or below, and wherein the cooled extrudate is subsequently cut into segments.

13. The process of any of the above claims wherein, in step (a), cow's milk is used.

14. The process of any of Claims 3-13 wherein the emulsifying agent is mixed into the cheese in an amount of 0.5 to 2 percent, based on the weight of the cheese.

15. The process of any of the above claims wherein the cheese is maintained at a temperature in the range of 43 to 63 °C (110 to 145 °F) while the cheese additive is mixed in.

16. The process of any of the above claims wherein, in step (f), the heated cheese is formed into a shape by being extruded as a continuous ribbon into cold sodium chloride brine and, in step (g), the cheese ribbon is held in cold sodium chloride brine until its core temperature drops to about 24 °C (75 °F) or below, and wherein the cooled ribbon is subsequently cut into sections, the sections of cooled cheese are comminuted, and the comminuted cheese is then individually quick frozen.

17. The process of any of Claims 1 to 15 wherein, in step (f), the heated cheese is formed into a string shape by being extruded into cold sodium chloride brine and, in step (g), the string-shaped extrudate is held in cold sodium chloride brine until its core temperature drops to about 24 °C (75 °F) or below, and wherein the cooled string-shaped extrudate is subsequently cut into segments.

18. The process of any of the above claims wherein, between said steps (e) and (f), food starch, in dry form, is mixed into the heated cheese, in an amount of at least 0.5 percent, based on the weight of the cheese.

19. The process of Claim 18 wherein the food starch is mixed into the heated cheese. in an amount of 0.5 to 10 percent, based on the weight of the cheese.

20. The process of Claim 18 wherein the food starch is mixed into the heated cheese in an amount of 1 to 4 percent, based on the weight of the cheese.

21. The process of any of Claims 18 to 20 wherein the starch is selected from the group consisting of non-pregelatinized corn starches and non-pregelatinized potato starches.

## Patentansprüche

1. Verfahren zur Herstellung eines fibrösen Weich- oder Halbweichkäses, umfassend die folgenden Schritte:
a) Pasteurisieren von Kuh- oder Büffelmilch;
b) Ansäuern der Milch zur Überführung in eine Käsemilch;
c) Koagulieren der Käsemilch, so daß man ein Koagulum aus Käsebruch und Molke erhält;
d) Zerschneiden des Koagulums und Abtropfenlassen der Molke, wobei ein Käsebruch zurückbleibt;
e) Erhitzen, Kneten und Ausziehen des Käsebruchs, bis er eine homogene fibröse Masse von erhitztem unreifem Käse ist;
f) Informbringen des erhitzten Käses;
g) Kühlen des geformten Käses in kaltem Salzwasser; und
h) Entfernen des gekühlten Käses aus dem Salzwasser;
**dadurch gekennzeichnet, daß** zwischen den Schritten (e) und (f) eine geringe Menge mindestens eines Käsezusatzes gründlich in den erhitzten Käse gemischt wird, wobei der Käsezusatz Emulgiermittel, Gummen, Stabilisatoren, Farbstoffe, feste Milchprodukte, Käsepulver oder natürliche oder modifizierte Speisestärke ist, wobei, wenn der Zusatz nur Stärke ist, er in einer Menge von 0,5 bis 10 %, bezogen auf das Gewicht des Käses, verwendet wird.

2. Verfahren nach Anspruch 1, wobei der Käse bei einer Temperatur von nicht mehr als etwa 71°C (160°F) gehalten wird, während der Käsezusatz eingemischt wird.

3. Verfahren nach einem der vorhergehenden Ansprüche, wobei ein Emulgiermittel alleine oder im Gemisch mit einem oder mehreren anderen Käsezusätzen in den erhitzten Käse zwischen den Schritten (e) und (f) in einer Menge von 0,01 bis 2 %, bezogen auf das Gewicht des Käses, eingemischt wird.

4. Verfahren nach einem der vorhergehenden Ansprüche, wobei das Emulgiermittel ein Emulgiersalz ist.

5. Verfahren nach einem der vorhergehenden Ansprüche, wobei das Emulgiermittel ein Phosphat- oder Citratsalz ist.

6. Verfahren nach einem der vorhergehenden Ansprüche, wobei das Emulgiermittel ein Natriumsalz ist.

7. Verfahren nach einem der Ansprüche 3 bis 6, wobei das Emulgiermittel in den Käse in Form einer wäßrigen Lösung eingemischt wird, die 5 bis 50 % des Emulgiermittels, bezogen auf das Gewicht der Lösung, enthält.

8. Verfahren nach einem der vorhergehenden Ansprüche, wobei nach Schritt (h) der Käse einen Feuchtigkeitsgehalt im Bereich von 45 bis 60 Gew.-% und einen Milchfettgehalt von mindestens etwa 30 Gew.-%, bezogen auf die Trockenmasse, hat.

9. Verfahren nach einem der vorhergehenden Ansprüche, wobei die Temperatur des Käses in einem Bereich von etwa 43 bis 71°C (110 bis 160°F) gehalten wird, während der Käsezusatz in den Käse gemischt wird.

10. Verfahren nach einem der vorhergehenden Ansprüche, wobei der Käsezusatz über einen Zeitraum im Bereich von 2 bis 10 Minuten in den erhitzten Käse gemischt wird, bevor der Käse in eine Form gebracht wird.

11. Verfahren nach einem der vorhergehenden Ansprüche, wobei das Emulgiermittel Natriumhexametaphosphat, Mononatriumphosphat, Dinatriumphosphat, Natriumtripolyphosphat oder Natriumcitrat ist.

12. Verfahren nach einem der vorhergehenden Ansprüche, wobei in Schritt (f) der erhitzte Käse durch Extrusion in kaltes Natriumchloridsalzwasser in eine Form gebracht wird, in Schritt (g) das Käseextrudat in kaltem Natriumchloridsalzwasser gehalten wird, bis seine Kerntemperatur auf etwa 24°C (75°F) oder darunter fällt und das gekühlte Extrudat anschließend in Segmente geschnitten wird.

13. Verfahren nach einem der vorhergehenden Ansprüche, wobei in Schritt (a) Kuhmilch verwendet wird.

14. Verfahren nach einem der Ansprüche 3 bis 13, wobei das Emulgiermittel in den Käse in einer Menge von 0,5 bis 2 %, bezogen auf das Gewicht des Käses, gemischt wird.

15. Verfahren nach einem der vorhergehenden Ansprüche, wobei der Käse bei einer Temperatur im Bereich von 43 bis 63°C (110 bis 145°F) gehalten wird, während der Käsezusatz eingemischt wird.

16. Verfahren nach einem der vorhergehenden Ansprüche, wobei in Schritt (f) der erhitzte Käse durch Extrusion als kontinuierliches Band in kaltes Natriumchloridsalzwasser in eine Form gebracht wird, in Schritt (g) das Käseband in kaltem Natriumchloridsalzwasser gehalten wird, bis seine Kerntemperatur auf etwa 24°C (75°F) oder darunter fällt, und das gekühlte Band anschließend in Segmente geschnitten wird, wobei die gekühlten Käsesegmente zerkleinert werden und der zerkleinerte Käse dann einzeln schnell eingefroren wird.

17. Verfahren nach einem der Ansprüche 1 bis 15, wobei in Schritt (f) der erhitzte Käse durch Extrusion in kaltes Natriumchloridsalzwasser in eine Strangform gebracht wird, in Schritt (g) das schnurförmige Extrudat in kaltem Natriumchloridwasser gehalten wird, bis seine Kerntemperatur auf etwa 24°C (75°F) oder darunter fällt, und das gekühlte strangförmige Extrudat anschließend in Segmente geschnitten wird.

18. Verfahren nach einem der vorhergehenden Ansprüche, wobei zwischen den Schritten (e) und (f) Speisestärke in trockener Form in einer Menge von mindestens etwa 0,5 %, bezogen auf das Gewicht des Käses, in den erhitzten Käse gemischt wird.

19. Verfahren nach Anspruch 18, wobei die Speisestärke in den erhitzten Käse in einer Menge von 0,5 bis 10 %, bezogen auf das Gewicht des Käses, gemischt wird.

20. Verfahren nach Anspruch 18, wobei die Speisestärke in den erhitzten Käse in einer Menge von 1 bis 4 %, bezogen auf das Gewicht des Käses, gemischt wird.

21. Verfahren nach einem der Ansprüche 18 bis 20, wobei die Stärke nicht zuvor gelatinierte Getreidestärke oder nicht zuvor gelatinierte Kartoffelstärke ist.

## Revendications

1. Procédé de fabrication d'un fromage fibreux à pâte molle ou semi-molle comprenant les étapes suivantes :
a) la pasteurisation de lait de vache ou de bison ou buffle;
b) l'acidification du lait pour le convertir en un lait de fromage;
c) la coagulation du lait de fromage pour obtenir un coagulum composé de caillé et de petit-lait;
d) le coupage du coagulum et l'écoulement du petit-lait de celui-ci, en laissant ainsi un caillé de fromage;
e) le chauffage, le malaxage et l'étirage du caillé de fromage jusqu'à ce qu'il soit une masse fibreuse, homogène, de fromage non mûri, chauffé;
f) le façonnage du fromage chauffé en une forme;
g) le refroidissement du fromage façonné dans une saumure froide; et
h) l'enlèvement du fromage refroidi de la saumure,
**caractérisé en ce qu'**entre les étapes (e) et (f) précitées, on mélange à fond dans le fromage chauffé une petite quantité d'au moins un additif de fromage choisi dans le groupe comprenant les agents émulsifiants, les gommes, les stabilisants, les colorants, les matières solides laitières, les poudres de fromage et les amidons alimentaires naturels ou modifiés, de sorte que, lorsque l'additif est de l'amidon seul, il est utilisé en une quantité de 0,5 à 10%, par rapport au poids du fromage.

2. Procédé suivant la revendication 1, dans lequel le fromage est maintenu à une température de pas plus d'environ 71°C (160°F) tout en y mélangeant l'additif de fromage.

3. Procédé suivant l'une ou l'autre des revendications précédentes, dans lequel un agent émulsifiant, seul ou en mélange avec un ou plusieurs autres additifs de fromage, est mélangé dans le fromage chauffé entre les étapes (e) et (f), en une quantité de 0,01 à 2%, par rapport au poids du fromage.

4. Procédé suivant l'une quelconque des revendications précédentes, dans lequel l'agent émulsifiant est un sel émulsifiant.

5. Procédé suivant l'une quelconque des revendications précédentes, dans lequel l'agent émulsifiant est un sel de phosphate ou citrate.

6. Procédé suivant l'une quelconque des revendications précédentes, dans lequel l'agent émulsifiant est un sel de sodium.

7. Procédé suivant l'une quelconque des revendications 3 à 6, dans lequel l'agent émulsifiant est mélangé dans le fromage sous la forme d'une solution aqueuse contenant 5 à 50% de l'émulsifiant, par rapport au poids de la solution.

8. Procédé suivant l'une quelconque des revendications précédentes, dans lequel après l'étape (h), le fromage a une teneur en humidité allant de 45 à 60% en poids et une teneur en matière grasse de lait d'au moins environ 30% en poids, sur une base de matières solides séchées.

9. Procédé suivant l'une quelconque des revendications précédentes, dans lequel la température du fromage est maintenue dans l'intervalle d'environ 43 à 71°C (110 à 160°F) pendant que l'additif de fromage est mélangé dans le fromage.

10. Procédé suivant l'une quelconque des revendications précédentes, dans lequel l'additif de fromage est mélangé dans le fromage chauffé pendant une période de temps allant de 2 à 10 minutes, avant que le fromage soit façonné en une forme.

11. Procédé suivant l'une quelconque des revendications précédentes, dans lequel l'agent émulsifiant est choisi dans le groupe comprenant l'hexamétaphosphate de sodium, le phosphate monosodique, le phosphate disodique, le tripolyphosphate de sodium et le citrate de sodium.

12. Procédé suivant l'une quelconque des revendications précédentes, dans lequel, dans l'étape (f), le fromage chauffé est façonné en une forme en étant extrudé dans de la saumure froide à base de chlorure de sodium et, dans l'étape (g), l'extrudat de fromage est maintenu dans la saumure de chlorure de sodium froide jusqu'à ce que sa température centrale baisse jusqu'à environ 24°C (75°F) ou moins, et dans lequel l'extrudat refroidi est ensuite coupé en segments.

13. Procédé suivant l'une quelconque des revendications précédentes, dans lequel, dans l'étape (a), on utilise du lait de vache.

14. Procédé suivant l'une quelconque des revendications 3 à 13, dans lequel l'agent émulsifiant est mélangé dans le fromage en une quantité de 0,5 à 2%, sur la base du poids du fromage.

15. Procédé suivant l'une quelconque des revendications précédentes, dans lequel le fromage est maintenu à une température dans l'intervalle de 43 à 63°C (110 à 145°F) pendant que l'additif de fromage y est mélangé.

16. Procédé suivant l'une quelconque des revendications précédentes, dans lequel, dans l'étape (f), le fromage chauffé est façonné en une forme en étant extrudé sous la forme d'un ruban continu dans de la saumure de chlorure de sodium froide et, dans l'étape (g), le ruban de fromage est maintenu dans de la saumure de chlorure de sodium froide jusqu'à ce que sa température centrale chute à environ 24°C (75°F) ou moins, et dans lequel le ruban refroidi est ensuite coupé en sections, les sections de fromage refroidi sont broyées et le fromage broyé est alors rapidement congelé individuellement.

17. Procédé suivant l'une quelconque des revendications 1 à 15, dans lequel, dans l'étape (f), le fromage chauffé est façonné sous la forme d'un cordon en étant extrudé dans de la saumure de chlorure de sodium froide et, dans l'étape (g), l'extrudat en forme de cordon est maintenu dans de la saumure de chlorure de sodium froide jusqu'à ce que sa température centrale chute à environ 24°C (75°F) ou moins, et dans lequel l'extrudat en forme de cordon refroidi est ensuite coupé en segments.

18. Procédé suivant l'une quelconque des revendications précédentes, dans lequel, entre les étapes (e) et (f) précitées, de l'amidon alimentaire, sous forme sèche, est mélangé dans le fromage chauffé en une quantité d'au moins 0,5%, par rapport au poids du fromage.

19. Procédé suivant la revendication 18, dans lequel l'amidon alimentaire est mélangé dans le fromage chauffé en une quantité de 0,5 à 10%, par rapport au poids du fromage.

20. Procédé suivant la revendication 18, dans lequel l'amidon alimentaire est mélangé dans le fromage chauffé en une quantité de 1 à 4%, par rapport au poids du fromage.

21. Procédé suivant l'une quelconque des revendications 18 à 20, dans lequel l'amidon est choisi dans le groupe comprenant les amidons de maïs non prégélatinisés et les amidons de pomme de terre non prégélatinisés.
